# EUROPEAN PATENT APPLICATION

(11) **EP 2 112 859 A1**
(43) Date of publication of application: **28.10.2009**
(21) Application number: 08007768.8
(22) Date of filing: 22.04.2008
(51) Int. Cl.: H04W 88/08

(54) **Method and base station for data transmission in mobile networks**

(71) Applicant: Nokia Siemens Networks Oy, 02610 Espoo (FI)
(72) Inventor: Eichinger, Josef Martin, 85464 Neufinsing (DE)
(74) Representative: Krombach, Rainer

(57) **Abstract**

The present invention relates to a method and base station for data transmission in a mobile network. According to the method, a base station is adapted to communicate with user equipment 10, 11, wherein the base station 1 comprises means 17 for managing the communication with user equipment 10, 11, a base station controller 16 for controlling the means 17 for managing the communication with user equipment 10, 11 and forwarding data received from the means 17 for managing the communication with user equipment 10, 11 to the mobile network and forwarding data received from the mobile network to the means 17 for managing the communication with user equipment 10, 11 . The method comprises the steps of receiving data on the base station 1 from the user equipment 10, 11, providing transmission means 4 to communicate wirelessly with another base station 2, 5 of the mobile network, providing a control unit 15 for communicating with at least two of the group of base station controller 16, means 17 for managing the communication with user equipment 10, 11 and transmission means 4, and exchanging data between the base station 1 and another base station 2, 5 using the transmission means 4 being controlled by the control unit 15.

## Description

The present invention relates to a method and a base station for data transmission in a mobile network.

When mobile networks are designed a first estimated required data transmission capacity for the mobile network is determined, depending on various parameters, such as the number of clients, average data capacity to be transmitted per client, number of sectors for a base station, geographical considerations etc. Due to the fast development of the mobile radio technology this first assumption has to be revised in a more or less short period of time after the roll out phase of the mobile network. Especially new data transmission technologies brought along new applications for the clients in recent years, which required in general an increasing data transmission capacity of the mobile network.

In conventional mobile networks the base stations are connected with the core network via wires or a microwave radio link system (e.g. using a parabolic antenna), connecting a number of base stations with each other until a wired connection to the core network is present. If a wired connection for the base station is not present, e.g. in sparsely populated or remote areas, microwave radio link systems are primarily used for transmitting the user data to the core network. However, no matter which data transmission technique is present only a maximum amount of data can be transmitted simultaneously therewith.

Antennas of a microwave radio link system connecting two base stations of a mobile network need to be aligned such that the radiated signals from one base station direct to the other base station. Any obstacles in between this transmission path will reduce the data transmission capacity of the radio link. Additionally, the momentary maximum data transmission capacity of such a type of connection depends on the current weather situation. Under disadvantageous weather conditions the transmission path can even become silent.

In general when the amount of data received from the user equipments can no longer be adequately transmitted to the core network of the mobile network the availability and the quality of service decreases rapidly for the client. In this case a limitation of the number of user equipment communicating with the base station simultaneously is an established procedure, which in consequence excludes clients from using the mobile network services for a certain period of time. Even if the number of user equipment is not limited the clients will notice such a shortage because the available capacity per client will be reduced respectively, which results in reduced quality of the voice signal.

Increasing the data transmission capacity e.g. of a microwave radio link system results in general in replacing the communication devices and the respective controllers with other devices having extended data transmission capacity. The extension of data transmission capacity of a wired connection in general results in extensive earthworks for replacing the existing wires with wires or optical fibres having larger data transmission capacity. Since both procedures are expensive and time-consuming, especially in view of the rapid development of the required data transmission capacity in recent years, it is therefore desirable to extend the data transmission capacity of a mobile radio network without abandoning the existing communication technique. Furthermore the time period for the interruption of the base station in such a case has to be as short as possible.

It is an object of the present invention to provide a method and a base station for the extension of capacity in a mobile network.

According to the invention, these objects are accomplished by a method and a base station according to the independent claims. Preferred embodiments are specified by the dependent claims.

The invention comprises a method for data transmission in a mobile network. The method may comprise a base station, being adapted to communicate with user equipment, wherein the base station has means for managing the communication with user equipment, a base station controller for controlling the means for managing the communication with user equipment and forwarding data received from the means for managing the communication with user equipment to the mobile network and forwarding data received from the mobile network to the means for managing the communication with user equipment. The method furthermore may comprise the steps of receiving data on the base station from the user equipment, providing transmission means to communicate wirelessly with another base station of the mobile network, providing a control unit for communicating with at least two of the group of base station controller, means for managing the communication with user equipment and transmission means. In addition, the method may comprise the step of exchanging data between the base station and another base station using the transmission means being controlled by the control unit.

Preferably, the method for data transmission in a mobile network with the step of exchanging data between the base station and another base station may furthermore comprise the steps of forwarding of data received from the user equipment by the means for managing the communication with user equipment to the control unit and/ or to the base station controller, receiving the data on the control unit, converting the received data to be transmitted to the transmission means in a first data format suitable for communicating with the transmission means, forwarding the data converted in the control unit to the transmission means, receiving the data converted in the control unit on the transmission means and transmitting the received data to another base station using the transmission means to forward the received data to the mobile network via another base station.

In a preferred embodiment the method for data transmission in a mobile network with the step of exchanging data between the base station and another base station may furthermore comprise the steps of receiving data from another base station on the base station by means of the transmission means, forwarding the received data to the control unit, converting the data received from another base station in a second data format suitable for communicating with the means for managing the communication with user equipment and/ or the base station controller, forwarding the data from the control unit to the means for managing the connection with user equipment and/ or to the base station controller, receiving data from the control unit by the means for managing the connection with user equipment and/ or by the base station controller, transmitting the received data to the user equipment using the means for managing the connection with user equipment to forward the received data to the user equipment.

The method for data transmission in a mobile network, wherein the base station is connected to a core network of the mobile network via a wired connection may furthermore comprise means for handling of the core network to communicate via the wired connection with the core network of the mobile network. It may also comprise the steps of providing a configurable multiplexer being adapted to communicate with at least two of the group of means for managing the communication with user equipment, means for managing the communication with the core network of the mobile network, the control unit and the base station controller, determining the amount of data that is received on the base station from the user equipment, comparing the amount of data with a predetermined value dependent on the wired connection, and configuring the configurable multiplexer to forward data to the control unit to start transmitting the exceeding amount of received data from the means for managing the communication with user equipment to another base station via the control unit and/or the base station controller using the transmission means to forward the exceeding amount of received data to the mobile network via the another base station and to transmit the non-exceeding amount of received data from the means for managing the communication with user equipment to the core network using the means for managing the communication with the core network of the mobile network if the predetermined value is exceeded.

This method may advantageously allow the distribution of received data from a plurality of user equipments both to the core network and to another base station and as a consequence thereof the operation of the base station even when the existing data transmission capacity of the wired connection to the core network is insufficient for forwarding the total amount of data to be transmitted.

Preferably the method may comprise the step of inputting the data to be transmitted to the user equipment or to another base station into a buffer of the base station, wherein the data to be transmitted are provided in the first data format and/ or the second data format.

In another preferred embodiment the method may comprise the steps of providing a means for connecting the base station controller with an Interface Driver, providing an U-Plane converter being adapted to convert information representing U-Plane data between the first data format and the second data format and vice versa, establishing a connection of the U-Plane converter with the configurable multiplexer, receiving of U-Plane data to be transmitted from the user equipment to another base station from the configurable multiplexer in the U-Plane converter, converting the U-Plane data received in the U-Plane converter from the second data format into the first data format, forwarding of the U-Plane data received and converted in the U-Plane converter to the Interface Driver, receiving of the U-Plane data converted by the U-Plane converter in the Interface Driver and forwarding of the U-Plane data received in the Interface Driver to another base station via the transmission means and vice versa.

The method may preferably comprise the steps of providing a C-Plane converter being adapted to convert information representing C-Plane data between the first data format and the second data format and vice versa, establishing a connection of the C-Plane converter with the configurable multiplexer, establishing a connection of the C-Plane converter with the Interface Driver, receiving of C-Plane data to be transmitted from the user equipment to another base station from the configurable multiplexer in the C-Plane converter, forwarding of the C-Plane data received from the configurable multiplexer in the C-Plane converter to the base station controller, converting the C-Plane data received in the C-Plane converter from the second data format into the first data format, forwarding of the C-Plane data received and converted in the C-Plane converter to the Interface Driver, receiving of the C-Plane data converted by the C-Plane converter in the Interface Driver and forwarding of the C-Plane data received in the Interface Driver to another base station via the transmission means and vice versa.

Preferably, the method may comprise the steps of establishing a connection of the C-Plane converter with the base station controller, receiving of C-Plane data to be transmitted from the user equipment to another base station in the base station controller, forwarding of the C-Plane data received in the base station controller to the C-Plane converter, receiving of the C-Plane data forwarded by the base station controller in the C-Plane converter, converting the C-Plane data received in the C-Plane converter from the second data format into the first data format, forwarding of the C-Plane data received and converted in the C-Plane converter to the Interface Driver, receiving of the C-Plane data converted by the C-Plane converter in the Interface Driver and forwarding of the C-Plane data received in the Interface Driver to another base station via the transmission means and vice versa.

In another preferred embodiment the method may comprise the steps of establishing a connection of the U-Plane converter with the configurable multiplexer, receiving of U-Plane data to be transmitted from the user equipment to another base station in the configurable multiplexer, forwarding of the U-Plane data received in the configurable multiplexer to the U-Plane converter, receiving of the U-Plane data forwarded by the configurable multiplexer in the U-Plane converter, converting the U-Plane data received in the U-Plane converter from the second data format into the first data format, forwarding of the U-Plane data received and converted in the U-Plane converter to the Interface Driver, receiving of the U-Plane data converted by the U-Plane converter in the Interface Driver and forwarding of the U-Plane data received in the Interface Driver to another base station via the transmission means and vice versa.

Preferably, the method may comprise the steps of establishing a connection of the U-Plane converter with the base station controller, receiving of U-Plane data to be transmitted from the user equipment to another base station in the base station controller, forwarding of the U-Plane data received in the base station controller to the U-Plane converter, receiving of the U-Plane data forwarded by the base station controller in the U-Plane converter, converting the U-Plane data received in the U-Plane converter from the second data format into the first data format, forwarding of the U-Plane data received and converted in the U-Plane converter to the Interface Driver, receiving of the U-Plane data converted by the U-Plane converter in the Interface Driver and forwarding of the U-Plane data received in the Interface Driver to another base station via the transmission means and vice versa.

In the method for data transmission in a mobile network the transmission means is preferably supporting a radio technique according to a radio standard for mobile access networks and a relating data transmission method and communication interface format(s).

Therefore, the transmission means may correspond to that of the transmission means of a conventional user equipment (e.g. a customer premised equipment without display, battery, user interface etc). In another embodiment of the present invention low-cost radio components, which are compatible with e.g. IEEE radio standards and 3GPP defined radio standards (e.g. data cards supporting a radio technique according to the above mentioned standards) may be used for the transmission means of the base station having communication interface format(s) and data transmission method which are different from established communication interface formats and data transmission methods used for wired connections and microwave radio link systems.

Preferably, a base station of a mobile network, being adapted to communicate with user equipment and being connectable to a mobile network may comprise means for managing the communication with user equipment, a base station controller for controlling the means for managing the communication with user equipment, means for forwarding of data received from the means for managing the communication with user equipment to the mobile network and data received from mobile network to the means for managing the communication with user equipment. The base station may also comprise means for receiving data on the base station from user equipment, a transmission means, wherein the transmission means is adapted to communicate wirelessly with another base station and a control unit for managing and establishing the communication between the another base station via the transmission means and the means for managing the communication with user equipment and/ or the base station controller. The base station may furthermore comprise a means for exchanging data between the base station and another base station using the transmission means being controlled by the control unit.

It is an advantage of a base station according to the present invention that the use of a transmission means in combination with the control unit allows the transmission of data received from user equipment to another base station of the mobile network with a wireless communication technique and thus enabling the base station to work as a Multi-hop base station.

The present invention can realize a low-cost implementation of a homogenous Multi-hop network for an existing mobile network, which is already connected to a wired network. Another advantage of the transmission means according to the present invention is the use of at least one conventional compliant interface like USB, PCMCIA, PCIExpress, FireWire, etc. for connecting the transmission means to the base station. In this scenario the control unit provides the suitable data formats for the data transmission to another base station via the transmission means and the components inside of the base station, e.g. base station controller, means for managing the communication with the core network of the mobile network and means for managing the communication with user equipment. Although the data format for the transmission means and the above mentioned components of the base station are different the transmission means can be connected to the base station by using the data conversion performed in the control unit. In another embodiment of a base station of a mobile network the means for exchanging data between the base station and another base station using the transmission means being controlled by the control unit may furthermore comprise means for forwarding of data received from the user equipments by the means for managing the communication with user equipment to the control unit and/ or to the base station controller, means for receiving the data on the control unit. The base station may also comprise means for converting the received data to be transmitted to the transmission means in a first data format suitable for communicating with the transmission means and means for forwarding the data converted in the control unit to the transmission means, means for receiving the data converted in the control unit on the transmission means and means for transmitting the received data to another base station using the transmission means to forward the received data to the mobile network via another base station.

In a base station of a mobile network the means for exchanging data between the base station and another base station using the transmission means being controlled by the control unit may comprise means for receiving data from another base station on the base station by means of the transmission means and means for forwarding the received data to the control unit. The base station may also comprise means for converting the data received from another base station in a second data format suitable for communicating with the means for managing the communication with user equipment and/or the base station controller, means for forwarding the data from the control unit to the means for managing the connection with user equipment and/ or to the base station controller. Furthermore the base station may comprise means for receiving data from the control unit by the means for managing the connection with user equipment and/ or by the base station controller, means for transmitting the received data to the user equipment using the means for managing the connection with user equipment to forward the received data to the user equipment.

Preferably, in a base station of a mobile network the base station is connected to a core network of the mobile network via a wired connection and furthermore may comprise means for managing the communication with the core network of the mobile network to communicate via the wired connection with the core network of the mobile network. It may also comprise means for providing a configurable multiplexer being adapted to communicate with at least two of the group of means for managing the communication with user equipment, means for managing the communication with the core network of the mobile network, the control unit and the base station controller. The base station may also comprise means for determining the amount of data that is received on the base station from the user equipment, means for comparing the amount of data with a predetermined value dependent on the wired connection, and means for configuring the configurable multiplexer to forward data to the control unit to start transmitting the exceeding amount of received data from the means for managing the communication with user equipment to another base station via the control unit and/ or the base station controller using the transmission means to forward the exceeding amount of received data to the mobile network via the another base station. Furthermore the base station may comprise means for transmitting the non-exceeding amount of received data from the means for managing the communication with user equipment to the core network using the means for managing the communication with the core network of the mobile network if the predetermined value is exceeded.
In another preferred embodiment a base station of a mobile network may comprise means for managing the communication with the core network of the mobile network, means for configuring of a configurable multiplexer and a configurable multiplexer for managing a communication between the means for managing the communication with the core network of the mobile network, the control unit and the means for managing the communication with user equipment for forwarding of data received from the means for managing the communication with user equipment to another base station via the transmission means and/ or to the core network via the means for managing the communication with the core network of the mobile network.

In a preferred embodiment of the present invention the control unit is a software-based solution for converting the various incoming and outgoing data formats. In another embodiment the control unit may be a hardware-based component.

Preferably, the base station of a mobile network the control unit may comprise a C-Plane converter for converting data representing information of C-Plane communication data from a first data format suitable for being processed by the configurable multiplexer or by the base station controller into a second data format suitable for being processed by an Interface Driver and for converting data representing information of C-Plane communication data from the second data format into the first data format, an U-Plane converter for converting data representing information of U-Plane communication data from the first data format into the second data and for converting data representing information of U-Plane communication data from the second data format into the first data format and an Interface Driver for transmitting of data received from the C-Plane converter and/ or the U-Plane converter to the transmission means and vice versa.

In another preferred embodiment the base station of a mobile network the configurable multiplexer may comprise means for measuring an amount of received and sent data from user equipment, means for determining the bandwidth of the wired connection to the core network, means for comparing the amount of data received from user equipment with a predetermined value and means for making switching decisions between the core network and the transmission means for transmitting data received from the means for managing the communication with user equipment to the core network via the means for managing the communication with the core network of the mobile network and/ or to another base station via the transmission means.

In another preferred embodiment of the base station of a mobile network the control unit may be adapted to communicate with the configurable multiplexer, wherein the control unit is adapted for providing data to be transmitted to the configurable multiplexer in a data format suitable for communicating with the configurable multiplexer.

Preferably, the base station of a mobile network may furthermore comprise a means for connecting the base station controller with the Interface Driver for transmitting data to/ from another base station via the transmission means.

In the base station of a mobile network the means for connecting the base station controller with the Interface Driver may be establishing a connection of the U-Plane converter with the configurable multiplexer for transmitting U-Plane data to/ from another base station via the transmission means.

In a preferred embodiment of the base station of a mobile network the C-Plane converter may be communicating both with the Interface Driver and the configurable multiplexer for transmitting C-Plane data to/ from another base station via the transmission means.

In another base station of a mobile network the C-Plane converter may preferably communicate both with the Interface Driver and the base station controller for transmitting C-Plane data to/ from another base station via the transmission means.

Preferably, in the base station of a mobile network the U-Plane converter may be communicating both with the Interface Driver and the configurable multiplexer for transmitting U-Plane data to/ from another base station via the transmission means.

In the base station of a mobile network the U-Plane converter may be preferably communicating both with the Interface Driver and the base station controller for transmitting U-Plane data to/ from another base station via the transmission means.

In another preferred embodiment of the base station of a mobile network the U-Plane converter may be communicating both with the Interface Driver and the base station controller for transmitting U-Plane data to/ from another base station via the transmission means.

A base station of a mobile network may preferably comprise a plurality of transmission means to communicate with a plurality of other base stations of the mobile network.

In yet another preferred embodiment of the base station of a mobile network the plurality of transmission means may be adapted to communicate with the control unit for transmitting data to/ from another base station via the plurality of transmission means.

Preferably, in a base station of a mobile network the plurality of transmission means may be adapted to communicate with a separate control unit for each one out of the plurality of transmission means for transmitting data to/from another base station via the plurality of transmission means.

In a base station of a mobile network the configurable multiplexer may be adapted to communicate with a plurality of transmission means via at least one control unit for transmitting data to/ from another base station via the transmission means.

In another preferred embodiment of a base station of a mobile network the radio technique for the communication of the transmission means with another base station corresponds to that of the communication of the means for managing of user equipment with the user equipment.

Preferably, the base station of the mobile network may determine, if the means for measuring an amount of received and sent data from user equipment and that the amount of received data exceeds a predetermined value, wherein the predetermined value is provided by the means for determining the bandwidth of the core network, then the configurable controller starts transmitting the exceeding amount of received data to another base station via the control unit and via the transmission means, and is forwarding the non-exceeding amount of received data to the core network via the means for managing the communication with the core network of the mobile network.

In another preferred embodiment the base station of the mobile network the predetermined value may be provided by another base station.

Preferably, in a base station of a mobile network the predetermined value may be provided by the Radio Link Control (RLC) of the mobile network.

In another preferred embodiment of the base station of a mobile network the transmission means to communicate wirelessly with another base station may be disposed from the upper end of the base station in axial direction of the base station with a distance DeltaH.

Preferably, in the base station of a mobile network the transmission means to communicate wirelessly with another base station may have an antenna to forward the received data to the core network via the another base station.

In another preferred embodiment the transmission means may have an external antenna being connectable to the transmission means for transmitting data from/ to another base station of the mobile network.

In a preferred embodiment of the base station of a mobile network the transmission means to communicate wirelessly with another base station may be attached to the base station.

The base station of the mobile network may preferably comprise a buffer for inputting of data provided in the first data format and the second data format and a means for inputting the data to be transmitted to the user equipment or to another base station into the buffer.

Preferably, the base station of a mobile network may comprise a plurality of transmission means for transmitting data to the base station and receiving data from the base station.

The present invention may furthermore comprise a mobile radio network comprising at least one of the base stations described above.

Preferably, the transmission means may be considered like a normal data source which receives and forwards data from/ to another base station of the mobile network. This can be advantageous since only the control unit is required for managing and converting the communication data between the base station and the transmission means for transmitting data to another base station.

In another preferred embodiment of the present invention the transmission means with its respective buffer may be managed over a gateway-proxy, which may generate equivalent messages and control information as would be seen when the base station is connected to the core network of the mobile network via a wired connection.

Preferably, in order to increase the performance additional messages may be used to improve the communication between the transmission means and the base station.

In another embodiment the C-Plane messages may be preferably derived from the data stream itself by the base station.

Preferably, C-Plane messages may be generated by the base station based on the messages received from the core network. However, according to the present invention the base station may work as a gateway proxy, while the base station is not aware of the presence of the transmission means.

In another preferred embodiment the C-Plane messages may be forwarded by the base station and forwarded by the gateway to the core network. In this case the gateway knows that the user equipment is connected over a Multi-hop enabled base station.

In a preferred embodiment of the present invention the U-Plane converter and the C-Plane converter should work fast in order to enable an operation of the base station in which the user does not notice a delay of communication by the function thereof.

Preferred embodiments and further details of the present invention will be explained in the following with reference to the figures.

Fig. 1 shows the architecture of a typical 3GPP network according to the state of the art.

Fig. 2 shows an example of a mobile network with Multi-hop connection of the respective nodes.
Fig. 3 shows a preferred embodiment of a base station with extended data transmission capacity according to the invention.

Fig. 4 shows one embodiment of a buffer in a base station according to the invention.

Fig. 5 shows one embodiment of the method for extending capacity in a mobile network according to the invention.

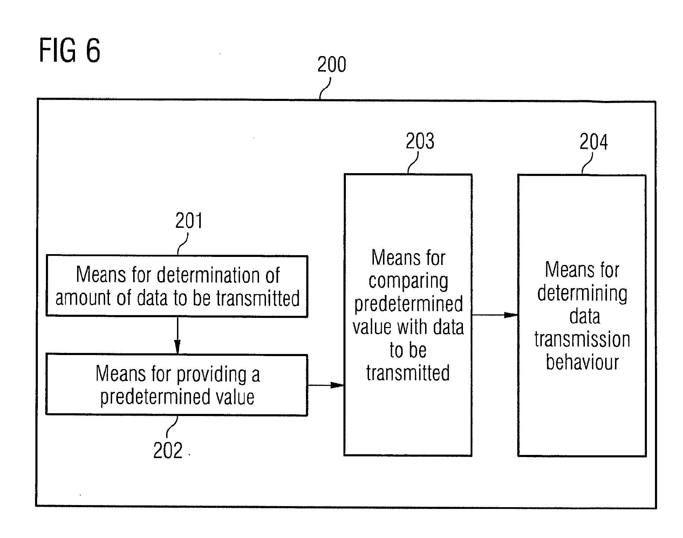

Fig. 6 shows one embodiment of a control unit for a base station with extended capacity according to the invention.

Fig. 7 shows one embodiment of a Multi-hop enabled base station according to the invention.

Fig. 8 shows another embodiment of a base station with extended data transmission capacity according to the invention.

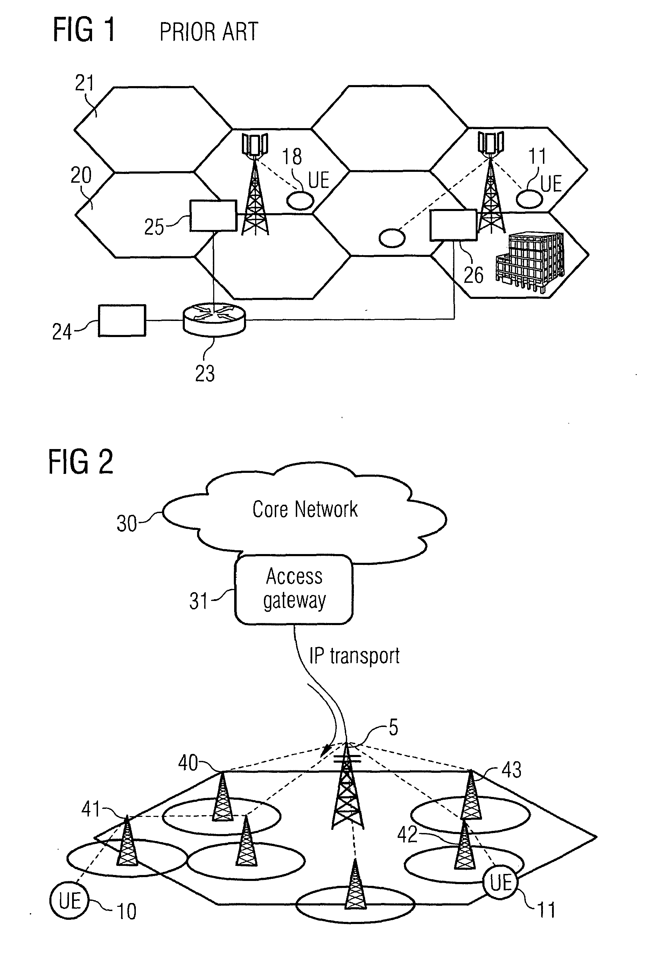

Fig. 1 shows the architecture of a typical 3GPP network according to the state of the art. The network comprises a plurality of base stations 25, 26, wherein each site forms and covers a plurality of sectors 20, 21, dependent on the present wireless communication technique. The respective coverage area of a sector 20, 21 is simply illustrated as a hexagon, wherein the actual geometry can vary. Within the plurality of sectors 20, 21 of a base station 25, 26 a plurality of mobile devices, also called user equipment 18, 11 is communicating with the base stations 25, 26. The base stations 25, 26 receive and transmit data from the user equipment 18, 11 by means of radio access. Each base station 25, 26 is furthermore connected with a gateway 23. The communication between the base stations 25, 26 and the gateway 23 is based on wire lines. Gateway 23 transmits the in- and outgoing data to the backbone 24 of the mobile network or to the respective base stations 25, 26.

Fig. 2 shows an example of a mobile network with Multi-hop connection between a plurality of nodes. In contrast to the mobile network of Fig. 1, each one out of the plurality of base stations is now denoted as a Multi-hop node 40, 41, 42, 43. Each Multi-hop node 40, 41, 42, 43 is capable of transmitting and receiving data from one Multi-hop node 40, 41, 42, 43 to another one or to a master base station 5 by means of a wireless communication technique. The master base station 5 is connected to an access gateway 31. The access gateway 31 is communicating with the core network 30 using a wired connection.

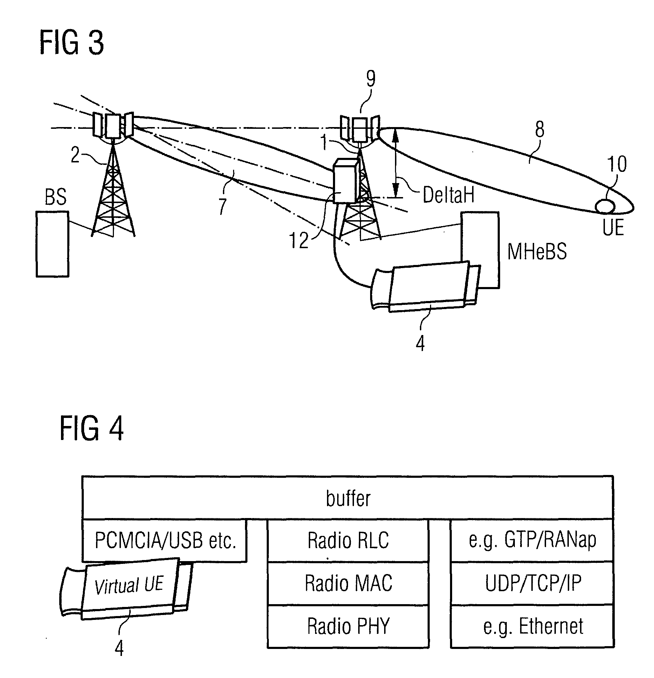

Fig. 3 shows a preferred embodiment of a base station 1 with extended data transmission capacity according to the invention. The use of a transmission means 4 therein enables the extension of the data transmission capacity between the base station 1 and another base station 2. The wireless data transmission of the transmission means 4 enables additionally the realization of a Multi-hop network for newly planned mobile networks, when no wires for the communication of the base stations 1, 2 with a core network are available. In the scenario shown in Fig. 3, firstly data from user equipment 10 are transmitted to the base station 1. The user equipment 10 is located within the sector beam pattern 8, thus enabling communication with the base station 1. The base station 1 has three externally mounted antennas 9 for receiving and forwarding the data from/ to the plurality of user equipment. Generally each sector of the base station 1 has one externally mounted antenna. Secondly the received data from antennas 9 are transmitted to a base station controller (not shown) in the base station 1. The base station controller and a control unit (not shown) are processing the received data and are providing them to the another base station 2 via the transmission means 4.
An external antenna 12 connected to the transmission means 4 is disposed with a distance DeltaH from the upper end of the antennas of the base station 1. The distance DeltaH is thereby such chosen that the transmission performance from the transmission means 4 to the another base station 2 is optimized. In this scenario the another base station 2 is connected to the core network (not shown) via wire but could also transmit the received data from the base station 1 to a further base station (not shown) using also wireless communication technique (e. g. a transmission means) until a master base station is reached, in case the another base station 2 does not comprise a wired connection to the core network.

The transmission means 4 has an antenna for transmitting the received data to the another base station 2. In another embodiment of the present invention the transmission means 4 has no antenna for communicating with the another base station 2 and is forwarding the received data to an antenna belonging to the base station 1.

Fig. 4 shows one embodiment of a buffer in a base station according to the invention. In combination with the Radio Link Control (RLC) function of the mobile network the data to be transmitted by a transmission means 4 to communicate wirelessly with another base station are provided in a particular section of the buffer. In case that extra capacity is needed the exceeding amount of data to be transmitted via the transmission means 4 to another base station is being chosen for data transmission and provided. The buffer also has to consider the amount of data that are transmitted with the wired connection to the core network. According to the present invention the buffer configuration in an existing base station in combination with an upgraded transmission means 4 has to be modified, in order to operate the transmission means 4 with the required software capabilities in view of the use of the transmission means 4 for providing extra data transmission capacity. Since according to a preferred embodiment of the present invention the transmission means 4 is a low-cost communication device working in accordance with standard specifications for its hard- and software interfaces such a buffer modification can be performed fairly easy. At present such a standard interface is realized via e.g. PCMCIA, USB, etc.

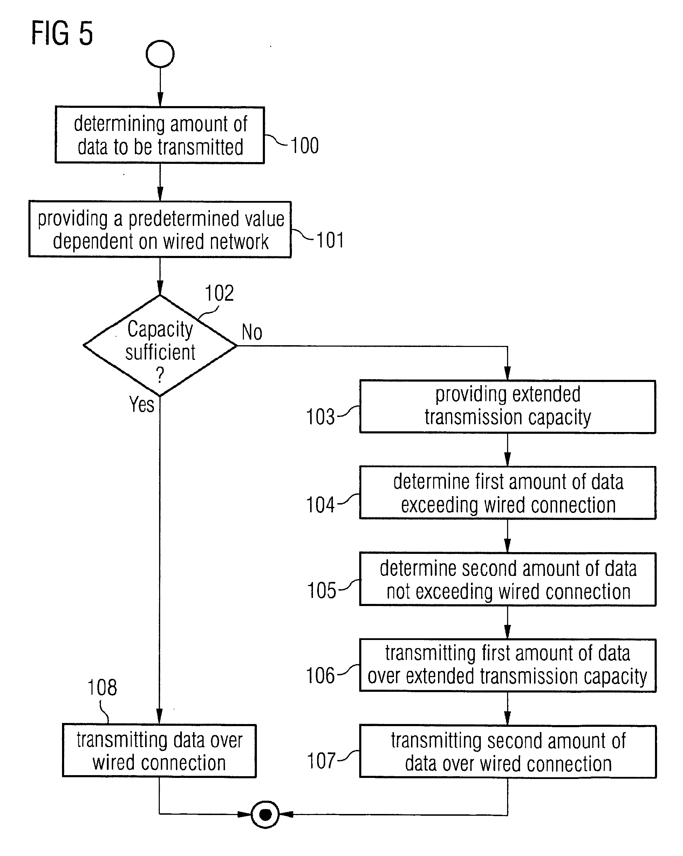

Fig. 5 shows one embodiment of the method for extending capacity in a mobile network according to the invention.

In step 100, it is determined how many data have to be transmitted to another base station. This may be done, for example, by evaluating the number of user equipments communicating with the base station and considering the present type of communication application for each one of the user equipment.

In step 101, data transmission capacity relating to an existing wired connection of the base station with the core network is provided in form of a predetermined value. This capacity transmission information is dependent among other things on the type of material used for the wired connection, the number of wired connections available at the base station and further specifications relating to the data transmission technique, etc. The value for the data transmission capacity of the present wired connection can be measured during the roll-out phase of the mobile network and is inputted in the control unit of the base station. Alternatively no measurement is performed and a predetermined value is inputted in the control unit being a default value or a known limit for the present wired connection.

In step 102, it is determined whether the present data transmission capacity of the wired connection is sufficient for the transmission of the amount of data to be transmitted to another base station. If it is sufficient, the wired connection for data transmission of the data to be transmitted is chosen, and the data are transmitted to another base station in step 108. If the present data transmission capacity of the wired connection is insufficient, the extended data transmission capacity according to the invention is provided in step 103. In step 104 the amount of data to be transmitted exceeding the data transmission capacity of the wired connection is determined (denoted as a first amount). In step 105 the amount of data to be transmitted not exceeding the data transmission capacity of the present wired connection is determined (denoted as a second amount). In step 106 the means for extending data transmission capacity to communicate wirelessly with another base station is selected, in order to transmit the exceeding amount of data to be transmitted to another base station. The method proceeds to step 107, in which the wired connection is used for transmitting the amount of data not exceeding the data transmission capacity of the wired connection to the core network of the mobile network.

Fig, 6 shows one embodiment of a control unit 200 for a base station with extended capacity according to the invention. The control unit 200 comprises means for determining data to be transmitted 201, these data corresponding to the amount of data received by user equipments communicating with the base station. Means for providing a predetermined value 202 provide information about the existing data transmission capacity of a wired connection of the base station with the core network. Based on the information provided by the means 201 and 202, means for comparing the predetermined value with the amount of data to be transmitted 203 determine means for determining data transmission behaviour 204. The means for determining data transmission behaviour 204 determines the relating communication technique for the data to be transmitted to another base station dependent on the amount of data to be transmitted.

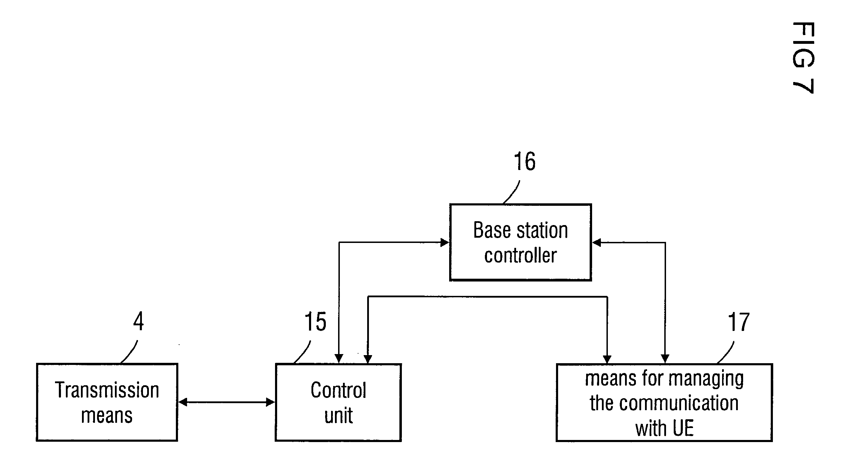

Fig. 7 shows a preferred embodiment of a Multi-hop enabled base station. The base station comprises a means 17 for managing the communication with user equipment 10, 11, a base station controller 16 and a control unit 15. The control unit 15 is managing the communication and data conversion of the communication data being processed on the one hand within the base station and user equipments via the means 17 for managing the communication with user equipment 10, 1. On the other hand the control unit 15 has to manage the communication and data conversion with another base station (not shown) of a mobile network via a transmission means 4. The base station is not connected with the core network of the mobile network. The transmission means 4 therefore uses a wireless radio communication technique for forwarding and receiving data to/ from another base station of the mobile network.

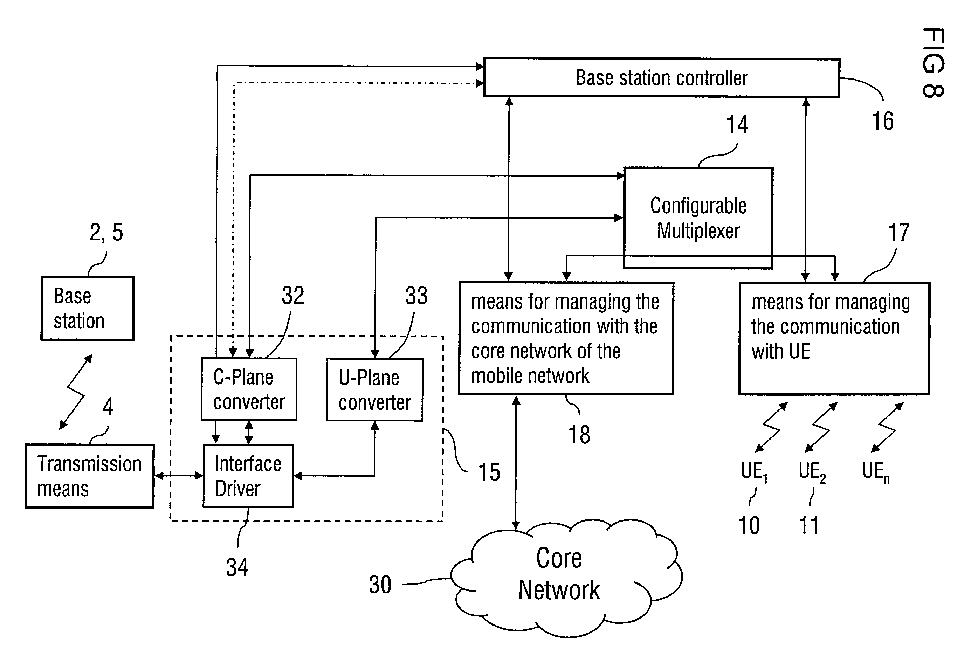

Fig. 8 shows a setup of another preferred embodiment of a base station which has extended data transmission capacity by using a transmission means 4, which is wirelessly transmitting data to another base station 2, 5 of a mobile network. The base station has a wired connection to the core network 30 of the mobile network. The communication between the base station and the core network 30 is managed by a means 18 for managing the communication with the core network of the mobile network. The base station furthermore comprises a base station controller 16 and a means for managing the communication with user equipment 10, 11, which is adapted to communicate with a plurality of user equipment 10, 11 within reach of the base station. A control unit 15 which is adapted to communicate with the transmission means 4, the base station controller 16 and a configurable multiplexer 14 is used. The control unit 15 has a C-Plane converter 32 and a U-Plane converter 33 for data conversion of communication data representing the C-Plane and U-Plane information of the data to be transmitted. The control unit 15 furthermore has an Interface Driver 34 for receiving the data from the transmission means 4. The configurable multiplexer 14 is communicating both with the means 18 for managing the communication with the core network of the mobile network, the control unit 15 and the means 17 for managing the communication with user equipment 10, 11. In the case when the amount of data received from the plurality of user equipment 10, 11 exceeds the data transmission capacity of the wired connection to the core network 30 then the configurable multiplexer 14 is forwarding the non-exceeding amount of communication data to the core network 30 via the means 18 for managing the communication with the core network of the mobile network. The exceeding amount of data is sent by the configurable multiplexer 14 to another base station 2, 5 via the transmission means 4. In the case that the base station receives communication data from another base station 2, 5 of the mobile network then the control unit 15 is converting the received data into a data format, which can be processed by the base station controller 16, the means 18 for managing the communication with the core network of the mobile network and the means 17 for managing the communication with user equipment 10, 11. Depending on the destination of the data received from another base station 2, 5 these data will be forwarded in the base station by the configurable multiplexer 14 either to the core network 30 of the mobile network via the means 18 for managing the communication with the core network of the mobile network or will be forwarded to the use equipment 10, 11 via the means 17 for managing the communication with user equipment 10, 11.

The specifications and drawings are to be regarded in an illustrative rather than a restrictive sense. It is evident that various modifications and changes may be made thereto, without departing from the scope of the invention as set forth in the claims. It is possible to combine the features described in the embodiments in a modified way for providing additional embodiments that are optimized for a certain usage scenario. As far as such modifications are readily apparent for a person skilled in the art, these modifications shall be regarded as implicitly disclosed by the above described embodiments.

## Claims

1. Method for data transmission in a mobile network with a base station (1), being adapted to communicate with user equipment (10, 11), wherein the base station (1) comprises
- means (17) for managing the communication with user equipment (10, 11),
- base station controller (16) for controlling the means (17) for managing the communication with user equipment (10, 11) and forwarding data received from the means (17) for managing the communication with user equipment (10, 11) to the mobile network and forwarding data received from the mobile network to the means (17) for managing the communication with user equipment (10, 11); the method comprising the steps of
- receiving data on the base station (1) from the user equipment (10, 11),
**characterized by** the steps of
- providing transmission means (4) to communicate wirelessly with another base station (2, 5) of the mobile network,
- providing a control unit (15) for communicating with at least two of the group of base station controller (16), means (17) for managing the communication with user equipment (10, 11) and transmission means (4), and
- exchanging data between the base station (1) and another base station (2, 5) using the transmission means (4) being controlled by the control unit (15).

2. Method for data transmission in a mobile network according to claim 1,
**characterized in that** the step of exchanging data between the base station (1) and another base station (2, 5) comprises the steps of
- forwarding of data received from the user equipment (10, 11) by the means (17) for managing the communication with user equipment (10, 11) to the control unit (15) and/ or to the base station controller (16),
- receiving the data on the control unit (15),
- converting the received data to be transmitted to the transmission means (4) in a first data format suitable for communicating with the transmission means (4),
- forwarding the data converted in the control unit (15) to the transmission means (4),
- receiving the data converted in the control unit (15) on the transmission means (4) and
- transmitting the received data to another base station (2, 5) using the transmission means (4) to forward the received data to the mobile network via another base station (2, 5).

3. Method for data transmission in a mobile network according to claim 1 or 2, **characterized in that** the step of exchanging data between the base station (1) and another base station (2, 5) comprises the steps of
- receiving data from another base station (2, 5) on the base station (1) by means of the transmission means (4),
- forwarding the received data to the control unit (15),
- converting the data received from another base station (2, 5) in a second data format suitable for communicating with the means (17) for managing the communication with user equipment (10, 11) and/ or the base station controller (16),
- forwarding the data from the control unit (15) to the means (17) for managing the connection with user equipment (10, 11) and/ or to the base station controller (16),
- receiving data from the control unit (15) by the means (17) for managing the connection with user equipment (10, 11) and/or by the base station controller (16),
- transmitting the received data to the user equipment (10, 11) using the means (17) for managing the connection with user equipment (10, 11) to forward the received data to the user equipment (10, 11).

4. Method for data transmission in a mobile network according to at least one of the preceding claims, wherein the base station (1) is connected to a core network (30) of the mobile network via a wired connection and furthermore comprises
- means for handling of the core network (18) to communicate via the wired connection with the core network (30) of the mobile network,
**characterized by** the steps of
- providing a configurable multiplexer (14) being adapted to communicate with at least two of the group of means (17) for managing the communication with user equipment (10, 11), means for handling of the core network (18), the control unit (15) and the base station controller (16),
- determining the amount of data that is received on the base station (1) from the user equipment (10, 11),
- comparing the amount of data with a predetermined value dependent on the wired connection, and
- configuring the configurable multiplexer (14) to forward data to the control unit (15) to start transmitting the exceeding amount of received data from the means (17) for managing the communication with user equipment (10, 11) to another base station (2, 5) via the control unit (15) and/ or the base station controller (16) using the transmission means (4) to forward the exceeding amount of received data to the mobile network via the another base station (2, 5) and to transmit the non-exceeding amount of received data from the means (17) for managing the communication with user equipment (10, 11) to the core network (30) using the means for handling of the core network (18) if the predetermined value is exceeded.

5. Method according to at least one of the claims 2-4,
**characterized by** the steps of
- providing a means for connecting the base station controller (16) with an Interface Driver (34),
- providing an U-Plane converter (33) being adapted to convert information representing U-Plane data between the first data format and the second data format and vice versa,
- establishing a connection of the U-Plane converter (33) with the configurable multiplexer (14),
- receiving of U-Plane data to be transmitted from the user equipment (10, 11) to another base station (2, 5) from the configurable multiplexer (14) in the U-Plane converter (33),
- converting the U-Plane data received in the U-Plane converter (33) from the second data format into the first data format,
- forwarding of the U-Plane data received and converted in the U-Plane converter (33) to the Interface Driver (34),
- receiving of the U-Plane data converted by the U-Plane converter (33) in the Interface Driver (34) and
- forwarding of the U-Plane data received in the Interface Driver (34) to another base station (2, 5) via the transmission means (4) and vice versa.

6. Method according to at least one of the claims 2-5,
**characterized by** the steps of
- providing a C-Plane converter (32) being adapted to convert information representing C-Plane data between the first data format and the second data format and vice versa,
- establishing a connection of the C-Plane converter (32) with the configurable multiplexer (14),
- establishing a connection of the C-Plane converter (32) with the Interface Driver (34),
- receiving of C-Plane data to be transmitted from the user equipment (10, 11) to another base station (2, 5) from the configurable multiplexer (14) in the C-Plane converter (32),
- forwarding of the C-Plane data received from the configurable multiplexer (14) in the C-Plane converter (32) to the base station controller (16),
- converting the C-Plane data received in the C-Plane converter (32) from the second data format into the first data format,
- forwarding of the C-Plane data received and converted in the C-Plane converter (32) to the Interface Driver (34),
- receiving of the C-Plane data converted by the C-Plane converter (32) in the Interface Driver (34) and
- forwarding of the C-Plane data received in the Interface Driver (34) to another base station (2, 5) via the transmission means (4) and vice versa.

7. Method according to at least one of the claims 2-6,
**characterized by** the steps of
- establishing a connection of the C-Plane converter (32) with the base station controller (16),
- receiving of C-Plane data to be transmitted from the user equipments (10, 11) to another base station (2, 5) in the base station controller (16),
- forwarding of the C-Plane data received in the base station controller (16) to the C-Plane converter (32),
- receiving of the C-Plane data forwarded by the base station controller (16) in the C-Plane converter (32),
- converting the C-Plane data received in the C-Plane converter (32) from the second data format into the first data format,
- forwarding of the C-Plane data received and converted in the C-Plane converter (32) to the Interface Driver (34),
- receiving of the C-Plane data converted by the C-Plane converter (32) in the Interface Driver (34) and
- forwarding of the C-Plane data received in the Interface Driver (34) to another base station (2, 5) via the transmission means (4) and vice versa.

8. Method according to at least one of the claims 2-7,
**characterized by** the steps of
- establishing a connection of the U-Plane converter (33) with the configurable multiplexer (14),
- receiving of U-Plane data to be transmitted from the user equipment (10, 11) to another base station (2, 5) in the configurable multiplexer (14),
- forwarding of the U-Plane data received in the configurable multiplexer (14) to the U-Plane converter (33),
- receiving of the U-Plane data forwarded by the configurable multiplexer (14) in the U-Plane converter (33),
- converting the U-Plane data received in the U-Plane converter (33) from the second data format into the first data format,
- forwarding of the U-Plane data received and converted in the U-Plane converter (33) to the Interface Driver (34),
- receiving of the U-Plane data converted by the U-Plane converter (33) in the Interface Driver (34) and
- forwarding of the U-Plane data received in the Interface Driver (34) to another base station (2, 5) via the transmission means (4) and vice versa.

9. Method according to at least one of the claims 2-8,
**characterized by** the steps of
- establishing a connection of the U-Plane converter (33) with the base station controller (16),
- receiving of U-Plane data to be transmitted from the user equipment (10, 11) to another base station (2, 5) in the base station controller (16),
- forwarding of the U-Plane data received in the base station controller (16) to the U-Plane converter (33),
- receiving of the U-Plane data forwarded by the base station controller (16) in the U-Plane converter (33),
- converting the U-Plane data received in the U-Plane converter (33) from the second data format into the first data format,
- forwarding of the U-Plane data received and converted in the U-Plane converter (33) to the Interface Driver (34),
- receiving of the U-Plane data converted by the U-Plane converter (33) in the Interface Driver (34) and
- forwarding of the U-Plane data received in the Interface Driver (34) to another base station (2, 5) via the transmission means (4) and vice versa.

10. A base station (1) of a mobile network, being adapted to communicate with user equipment (10, 11) and being connectable to a mobile network, comprising
- means (17) for managing the communication with user equipment (10, 11),
- base station controller (16) for controlling the means (17) for managing the communication with user equipment (10, 11),
- means for forwarding of data received from the means (17) for managing the communication with user equipment (10, 11) to the mobile network and data received from mobile network to the means (17) for managing the communication with user equipment (10, 11) and
- means for receiving data on the base station (1) from user equipment (10, 11),
**characterized by**
- transmission means (4), wherein the transmission means (4) is adapted to communicate wirelessly with another base station (2, 5),
- control unit (15) for managing and establishing the communication between the another base station (2, 5) via the transmission means (4) and the means (17) for managing the communication with user equipment (10, 11) and/ or the base station controller (16) and
- means for exchanging data between the base station (1) and another base station (2, 5) using the transmission means (4) being controlled by the control unit (15).

11. A base station (1) of a mobile network according to claim 10, **characterized in that** the means for exchanging data between the base station (1) and another base station (2, 5) using the transmission means (4) being controlled by the control unit (15) furthermore comprises
- means for forwarding of data received from the user equipments (10, 11) by the means (17) for managing the communication with user equipment (10, 11) to the control unit (15) and/ or to the base station controller (16),
- means for receiving the data on the control unit (15),
- means for converting the received data to be transmitted to the transmission means (4) in a first data format suitable for communicating with the transmission means (4),
- means for forwarding the data converted in the control unit (15) to the transmission means (4),
- means for receiving the data converted in the control unit (15) on the transmission means (4) and
- means for transmitting the received data to another base station (2, 5) using the transmission means (4) to forward the received data to the mobile network via another base station (2, 5).

12. A base station (1) of a mobile network according to claim 10 or 11, **characterized in that** the means for exchanging data between the base station (1) and another base station (2, 5) using the transmission means (4) being controlled by the control unit (15) comprises
- means for receiving data from another base station (2, 5) on the base station (1) by means of the transmission means (4),
- means for forwarding the received data to the control unit (15),
- means for converting the data received from another base station (2, 5) in a second data format suitable for communicating with the means (17) for managing the communication with user equipment (10, 11) and/ or the base station controller (16),
- means for forwarding the data from the control unit (15) to the means (17) for managing the connection with user equipment (10, 11) and/ or to the base station controller (16),
- means for receiving data from the control unit (15) by the means (17) for managing the connection with user equipment (10, 11) and/ or by the base station controller (16),
- means for transmitting the received data to the user equipment (10, 11) using the means (17) for managing the connection with user equipment (10, 11) to forward the received data to the user equipment (10, 11).

13. A base station (1) of a mobile network according to claim 10 or 12, the base station (1) is connected to a core network (30) of the mobile network via a wired connection and furthermore comprises
- means (18) for managing the communication with the core network (30) of the mobile network to communicate via the wired connection with the core network (30) of the mobile network,
**characterized in that** it comprises
- means for providing a configurable multiplexer (14) being adapted to communicate with at least two of the group of means (17) for managing the communication with user equipment (10, 11), means (18) for managing the communication with the core network (30) of the mobile network, the control unit (15) and the base station controller (16),
- means for determining the amount of data that is received on the base station (1) from the user equipment (10, 11),
- means for comparing the amount of data with a predetermined value dependent on the wired connection, and
- means for configuring the configurable multiplexer (14) to forward data to the control unit (15) to start transmitting the exceeding amount of received data from the means (17) for managing the communication with user equipment (10, 11) to another base station (2, 5) via the control unit (15) and/ or the base station controller (16) using the transmission means (4) to forward the exceeding amount of received data to the mobile network via the another base station (2, 5) and
- means for transmitting the non-exceeding amount of received data from the means (17) for managing the communication with user equipment (10, 11) to the core network (30) using the means (18) for managing the communication with the core network (30) of the mobile network if the predetermined value is exceeded.

14. A base station (1) of a mobile network according to at least one of the claims 10-13, **characterized in that** it furthermore comprises
- means (18) for managing the communication with the core network (30) of the mobile network,
- means for configuring of a configurable multiplexer (14) and
- configurable multiplexer (14) for managing a communication between
- the means (18) for managing the communication with the core network (30) of the mobile network,
- the control unit (15) and
- the means (17) for managing the communication with user equipment (10, 11) for forwarding of data received from the means (17) for managing the communication with user equipment (10, 11) to another base station (2, 5) via the transmission means (4) and/ or to the core network (30) via the means (18) for managing the communication with the core network (30) of the mobile network.

15. A base station (1) of a mobile network according to at least one of the claims 10-14, **characterized in that** the control unit (15) comprises
- C-Plane converter (32) for converting data representing information of C-Plane communication data from a first data format suitable for being processed by the configurable multiplexer (14) or by the base station controller (16) into a second data format suitable for being processed by an Interface Driver (34) and for converting data representing information of C-Plane communication data from the second data format into the first data format,
- U-Plane converter (33) for converting data representing information of U-Plane communication data from the first data format into the second data and for converting data representing information of U-Plane communication data from the second data format into the first data format and
- Interface Driver (34) for transmitting of data received from the C-Plane converter (32) and/ or the U-Plane converter (33) to the transmission means (4) and vice versa.
